# EUROPÄISCHE PATENTSCHRIFT

(11) **EP 4 035 253 B1**
(45) Veröffentlichungstag und Bekanntmachung des Hinweises auf die Patenterteilung: **22.01.2025**
(21) Anmeldenummer: 20765191.0
(22) Anmeldetag: 25.08.2020
(51) Int. Cl.: H02K 1/20, H02K 3/24, H02K 5/20, H02K 21/24

(54) **AXIALFLUSSMASCHINE**
AXIAL FLUX MACHINE
MACHINE À FLUX AXIAL

(30) Priorität: 25.09.2019 DE 102019125871
(43) Veröffentlichungstag der Anmeldung: 03.08.2022
(73) Patentinhaber: Schaeffler Technologies AG & Co. KG, 91074 Herzogenaurach (DE)
(72) Erfinder: BOSSECKER, Maximilian, 76549 Hügelsheim (DE); WITT, Holger, 77815 Bühl (DE)
(86) Internationale Anmeldenummer: PCT/DE2020/100736
(87) Internationale Veröffentlichungsnummer: WO 2021/058052

(56) Entgegenhaltungen:
- WO-A1-2019/171318
- US-B1- 6 304 011
- US-B2- 9 287 755
- US-B2- 9 496 776

## Beschreibung

Die Erfindung betrifft eine Axialflussmaschine (elektrischen Motor). Die Axialflussmaschine besitzt einen Stator, der zwischen einer ersten Rotorscheibe und einer zweiten Rotorscheibe sitzt.

Die deutsche Offenlegungsschrift DE 10 2005 023 492 A1 offenbart einen Scheibenläufer für einen Flachmotor zum Antrieb einer Verstelleinrichtung in einem Kraftfahrzeug. Der Flachmotor ist mit einer Ankerscheibe versehen, die ein Spulensystem aufweist und zur Wechselwirkung mit Permanentmagneten eines Stators des Flachmotors ausgebildet und vorgesehen ist. Ein Stromwender schließt sich in radialer Richtung nach innen an das Spulensystem der Ankerscheibe an.

Die deutsche Offenlegungsschrift DE 10 2014 221 648 A1 offenbart eine elektrische Maschine, welche insbesondere als Scheibenläufer ausgebildet sein kann. Am Stator der elektrischen Maschine sind wärmeerzeugende Komponenten, wie z.B. Spulen, vorgesehen. Ein Rotor ist relativ zu dem Stator drehbar und von diesem durch einen Luftspalt beabstandet. Die Kühlkanalanordnung weist einen Kühlkanal auf, durch den ein Kühlfluid in Umfangsrichtung entlang des Stators geströmt werden kann. Die Kühlanordnung erstreckt sich entlang einer Außenoberfläche der wärmeerzeugenden Komponenten des Stators. Die Kühlkanalanordnung ist zweiteilig ausgestaltet, wobei ein erstes Teil beispielsweise als druckgegossenes Bauteil aus gut wärmeleitfähigem Metall bestehen kann und mit einem zweiten als Deckel wirkenden Bauteil verschlossen werden kann. Im Innern des Kühlkanals können Stege oder Verwirbelungselemente für eine verbesserte Kühlleistung sorgen.

Gemäß dem Stand der Technik kann für eine Axialflussmaschine ein Kühlkonzept derart realisiert werden, dass die Eisenkerne, welche die Blechpakete für die Spulen darstellen, aus zwei Hälften zusammengesetzt sind. Dabei sind die Eisenkernhälften zwischen einem äußeren und einem inneren Haltering zu einer Einheit eingefasst. Dies geschieht entweder durch Laserschweißen und/oder mittels aufwendiger Klebeverbindungen.

Aus der US 6 304 011 B1 ist eine Axialflussmaschine gemäß dem Oberbegriff des Anspruchs 1 bekannt.

Bezüglich weiteren Standes der Technik wird auf die US 9 496 776 B2, die US 9 287 755 B2 und die WO 2019/171318 A1 verwiesen.

Der Erfindung liegt die Aufgabe zugrunde eine Axialflussmaschine zu schaffen, welche eine optimale Spulenkühlung und somit eine hohe Leistungsdichte (hohen Strom) für den Betrieb ermöglicht und dabei gleichzeitig einen vereinfachten Aufbau der Axialflussmaschine bereitstellt, der zudem kostengünstiger ist.

Die obige Aufgabe wird durch eine Axialflussmaschine gelöst, die die Merkmale des Anspruchs 1 umfasst.

Die erfindungsgemäße Axialflussmaschine besitzt einen Stator, der zwischen einer ersten Rotorscheibe und einer zweiten Rotorscheibe sitzt. Jeder der Rotorscheiben trägt Permanentmagnete, die in Form von Kreisringsegmenten ausgebildet und dem Stator zugewandt sind. Es ist ein zentraler Trägerflansch vorgesehen, der eine erste Seitenfläche und eine zweite Seitenfläche definiert. Der Trägerflansch teilt den Stator in eine erste Statorhälfte und eine zweite Statorhälfte. Ferner hat der Trägerflansch Durchflussöffnungen ausgebildet, die von der zweiten Statorhälfte zur ersten Statorhälfte führen. Ein erster, linker Statordeckel ist an der ersten Seitenfläche des Trägerflansches montiert. Der erste, linke Statordeckel hat am äußeren Umfang einen Sammelkanal ausgeformt. Ein zweiter, rechter Statordeckel ist an der zweiten Seitenfläche des Trägerflansches montiert. Der zweite, rechte Statordeckel hat am äußeren Umfang einen Verteilkanal ausgeformt. Eine Kühlmittelströmung ist vom Verteilkanal durch die Durchflussöffnungen zum Sammelkanal definiert.

Der Vorteil ist, dass mit dem erfindungsgemäßen Aufbau der Axialflussmaschine eine optimale Kühlung der Windungen der Spulen erreicht wird. Dadurch ist eine hohe Leistungsdichte (hoher Strom) für den Betrieb der Axialflussmaschine ermöglicht. Zusätzlich ist der Ausbau der Axialflussmaschine vereinfacht.

Am Trägerflansch sind mehrere Eisenkerne gehaltert, die sich zu gleichen Teilen in die erste Statorhälfte und die zweite Statorhälfte erstrecken. Jeder der Eisenkerne ist in der ersten Statorhälfte und der zweiten Statorhälfte von einer gewickelten Spule derart umschlossen, dass die in radialer Richtung aufeinanderfolgenden Spulen jeweils durch einen Spalt voneinander beabstandet sind. Der Verteilkanal des zweiten, rechten Statordeckels, die Spalte zwischen den aufeinanderfolgenden Spulen der zweiten Statorhälfte, die Durchflussöffnungen im Trägerflansch, die Spalte zwischen den aufeinanderfolgenden Spulen der ersten Statorhälften und der Sammelkanal des ersten, linken Statordeckels sind in fluider Kommunikation miteinander.

Der Vorteil des erfindungsgemäßen Aufbaus ist, dass eine kalte Kühlflüssigkeit (wie z.B. Öl) über den Zulaufanschluss des zweiten, rechten Statordeckels in die zweite Statorhälfte des Innenraumes des Stators gelangt. Der umlaufende Verteilkanal des zweiten, rechten Statordeckels gewährleistet, dass die "frische" Kühlflüssigkeit gleichermaßen alle Spulen erreicht.

Das Design der Axialflussmaschine sieht vor, dass jede Spule zu ihrer Nachbarspule beabstandet ist, so dass zwischen zwei Spulen immer ein Spalt vorliegt. Durch diese Spalten fließt nun das Kühlmedium von radial außen nach radial innen. Radial innen angekommen, gelangt der Kühlstrom über die vorgesehenen Durchflussöffnung des zentralen Trägerflansches in die erste Statorhälfte, um von hier aus durch die Spalten zwischen den Spulen der ersten Statorhälfte wieder radial nach außen zu strömen. Das mittlerweile erwärmte Kühlmedium gelangt anschließend über den Sammelkanal zum Rücklaufanschluss.

Gemäß einer möglichen Ausführungsform der Erfindung kann der zentrale Trägerflansch mehrere kreisringsegmentartige Fensteraussparungen ausgebildet haben. Die Fensteraussparungen sind durch Stege voneinander getrennt und um eine zentrale Öffnung herum für eine Nabe des Stators homogen verteilt angeordnet. Die gemäß einer möglichen Ausführungsform kreisringsegmentartig ausgebildeten Eisenkerne werden mittels einer Nut über die Stege mittig im Trägerflansch gehaltert.

Erfindungsgemäß ist das zentrale Element des Stators der Trägerflansch mit den daran angeordneten und durchgehenden Eisenkernen. Die Eisenkerne werden mit ihren Nuten und den Stegen des Trägerflansches einen Formschluss eingehen. Designbedingt ergibt sich somit eine Teilung der Spulen, die in der ersten Statorhälfte und der zweiten Statorhälfte angeordnet sind. Die Nut kann mit einem Isolator versehen sein.

Gemäß einer weiteren möglichen Ausgestaltung der Erfindung ist der Trägerflansch mit den montierten Eisenkernen mit einem Kunststoff umspritzt. Dadurch sind die Eisenkerne im Trägerflansch fixiert. Durch das Umspritzen liegt der Kunststoff beidseitig an einem äußeren Ring, beidseitig an den Stegen und beidseitig an einem inneren Ring des Trägerflansches an. Ebenso liegt der Kunststoff an einer oberen Seitenfläche, an einer unteren Seitenfläche und an seitlichen Seitenflächen des Eisenkerns an. Die Durchflussöffnungen am inneren Ring sind vom Kunststoff freigelassen.

Gemäß einer bevorzugten Ausführungsform kann jede der gewickelten Spulen eine kreisringsegmentartige Form besitzen, die die mit Kunststoff umspritzten, kreisringsegmentartigen Eisenkerne umgibt. Wie bereits erwähnt, definieren die in radialer Richtung aufeinanderfolgenden Spulen den Spalt, der einer der vielen Durchflußöffnungen im inneren Ring des Trägerflansches kommuniziert. Besonders vorteilhaft ist es, wenn die Spulen, die zugehörigen Phasenringe und die Phasenanschlüsse eine vormontierte Baugruppe bilden. Diese Baugruppe braucht dann nur noch auf die Eisenkerne auf beiden Seiten des Trägerflansches aufgeschoben werden.

Gemäß einer weiteren möglichen Ausführungsform der Erfindung kann der erste, linke Statordeckel und der zweite, rechte Statordeckel mehrere Dichtgeometrien in Form von Elastomerdichtungen ausgebildet haben. Die erste umlaufende Elastomerdichtung ist im Bereich des äußeren Umfangs der beiden Statordeckel vorgesehen. Die zweite umlaufende Elastomerdichtung ist im Bereich einer Öffnung für die Nabe vorgesehen. Eine weitere Elastomerdichtung ist in jeder der Aufnahmen für einen Phasenanschluss ausgebildet. Mehrere Schraubverbindungen, die sich durch den zentralen Trägerflansch erstrecken, drücken den ersten, linken Statordeckel und den zweiten, rechten Statordeckel gegeneinander an den zentralen Trägerflansch.

Gemäß einer weiteren Ausführungsform der Axialflussmaschine kann ein weiteres Dichtmittel vorgesehen sein, das die durch Speichen definierten Aussparungen des ersten, linken Statordeckels und des zweiten, rechten Statordeckels umgibt.

Die in der vorliegenden Patentanmeldung beschriebene Axialflussmaschine ist hinsichtlich absoluter Dichtigkeit (wie z.B. für eine Trockenanwendung) konstruiert.

Würde eine solche Axialflussmaschine in einem Nassraum (wie z.B. im Getriebe) integriert, kann gleichzeitig das Getriebeöl als Kühlmedium verwendet werden. Bei dieser Anwendung könnten viele der Dichtungen sowie die Verklebungen der Statordeckel entfallen. Dann hätte die Axialflussmaschine zwar gewisse Leckagen, aber der gezielte Strömungsverlauf des Kühlmediums durch den Innenraum des Stators bliebe erhalten.

Gemäß einer möglichen weiteren Ausführungsform kann die Axialflussmaschine als eine Stand-Alone-Lösung konzipiert sein. Dies bedeutet, dass die Rotorscheiben mittels Kugellager über den Stator sowohl axial als auch radial zentriert sind. Die Abtriebs- bzw. Getriebeeingangswelle kann somit ebenfalls über die Lager der Axialflussmaschine gelagert sein.

Sollte jedoch die Getriebeeingangswelle eine eigenständige Lagerung aufweisen, würden die beiden Rotorscheiben bereits durch die Welle radial zentriert. In diesem Fall müssten die Rotorscheiben nur noch axial zum Stator, d.h. zum Trägerflansch gelagert werden, um den beidseitigen Luftspalt zwischen Magneten der Rotorscheiben und dem Eisenkern einzuhalten. Dies kann durch den Verbau von jeweils einem Axiallager zwischen linker und rechter Rotorscheibe und dem Trägerflansch realisiert werden. Die benötigte Lagehülse kann dann entfallen.

Anhand der beigefügten Zeichnungen werden nun die Erfindung und ihre Vorteile durch Ausführungsbeispiele näher erläutert, ohne dadurch die Erfindung auf das gezeigte Ausführungsbeispiel zu beschränken. Die Größenverhältnisse in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
- **Figur 1**: zeigt eine perspektivische Ansicht einer Axialflussmaschine.
- **Figur 2**: zeigt eine perspektivische Ansicht der Axialflussmaschine aus Fig. 1 im Teilschnitt.
- **Figur 3**: zeigt eine vergrößerte perspektivische Ansicht der Axialflussmaschine aus Fig. 1 im Teilschnitt.
- **Figur 4**: zeigt eine perspektivische Ansicht eines Eisenkerns, der bei der erfindungsgemäßen Axialflussmaschine verbaut ist.
- **Figur 5**: zeigt eine perspektivische Ansicht des Eisenkerns aus Fig. 4, der an einer zentralen Nut einen Isolator aufgebracht hat.
- **Figur 6**: zeigt eine perspektivische Ansicht eines Trägerflansches für eine Vielzahl von Eisenkernen.
- **Figur 7**: zeigt eine perspektivische Ansicht eines Trägerflansches mit dem Eisenkern aus Fig. 5 in der Einführstellung.
- **Figur 8**: zeigt eine vergrößerte, perspektivische Schnittansicht entlang der in Fig. 7 gezeigten Linie A-A.
- **Figur 9**: zeigt eine perspektivische Ansicht des Trägerflansches mit dem Eisenkern in der vollkommen eingeschobenen Position im Trägerflansch.
- **Figur 10**: zeigt eine vergrößerte, perspektivische Schnittansicht entlang der in Fig. 9 gezeigten Linie A-A.
- **Figur 11**: zeigt eine perspektivische Ansicht des Trägerflansches, bei der sich der Eisenkern in der Arbeitsposition befindet.
- **Figur 12**: zeigt eine vergrößerte, perspektivische Schnittansicht entlang der in Fig. 11 gezeigten Linie A-A.
- **Figur 13**: zeigt eine perspektivische Ansicht des Trägerflansches, bei der der Eisenkern mit einem Sicherungselement in der Arbeitsposition gesichert ist.
- **Figur 14**: zeigt eine perspektivische Ansicht des Sicherungselements.
- **Figur 15**: zeigt eine perspektivische Teilansicht des Trägerflansches mit der Vielzahl von montierten Eisenkernen.
- **Figur 16**: zeigt eine perspektivische Teilansicht des Trägerflansches mit der Vielzahl von montierten Eisenkernen, die mit einem Kunststoff umspritzt sind.
- **Figur 17**: zeigt eine vergrößerte Schnittansicht entlang der in Fig. 16 dargestellten Schnittlinie B-B.
- **Figur 18**: zeigt eine vergrößerte Schnittansicht entlang der in Fig. 16 dargestellten Schnittlinie C-C.
- **Figur 19**: zeigt eine perspektivische Teilansicht des umspritzten Trägerflansches auf einer Nabe.
- **Figur 20**: zeigt eine perspektivische Teilansicht der vormontierten Spulen, die auf das Bauteil aus Fig. 19 aufgeschoben werden.
- **Figur 21**: zeigt eine perspektivische Teilansicht der auf das Bauteil montierten Spulen.
- **Figur 22**: zeigt eine perspektivische Außenansicht des Statordeckels.
- **Figur 23**: zeigt eine perspektivische Innenansicht des Statordeckels.
- **Figur 24**: zeigt eine perspektivische Teilansicht des Statordeckels im Teilschnitt.
- **Figur 25**: zeigt eine perspektivische Teilansicht des Statoraufbaus mit Statordeckel.
- **Figur 26**: zeigt eine perspektivische Teilansicht eines Schnitts entlang der Achse des Aufbaus aus Fig. 25.
- **Figur 27**: zeigt eine vergrößerte Schnittansicht entlang der in Fig. 25 dargestellten Schnittlinie D-D.
- **Figur 28**: zeigt eine perspektivische Teilansicht eines Schnitts entlang der Achse des Aufbaus aus Fig. 25.
- **Figur 29**: zeigt eine perspektivische Teilansicht eines Schnitts durch den Statoraufbau entlang eines Spulenkörpers.
- **Figur 30**: zeigt eine perspektivische Teilansicht eines Schnitts durch den Statoraufbau entlang eines Eisenkerns.
- **Figur 31**: zeigt eine perspektivische Teilansicht der Axialflussmaschine, bei der Teile weggebrochen sind, um den inneren Aufbau zu verdeutlichen.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die Figuren stellen lediglich Ausführungsbeispiele der Erfindung dar, ohne jedoch die Erfindung auf die dargestellten Ausführungsbeispiele zu beschränken. Die dargestellten Figuren beanspruchen nicht die Vollständigkeit des Aufbaus einer Axialflussmaschine (E-Motor). So sind z. B. keine Drehzahlsensoren dargestellt, welche die Winkellage und Drehrichtung üblicherweise von mindestens einer der Rotorscheiben "ablesen", um dann den Motor in geeigneter Weise ansteuern zu können. Auch wird auf die Darstellung von zusätzlichem Isolationsmaterial verzichtet (wie z.B. elektrisch isolierende Folie zwischen den einzelnen Phasenringen, um Funkenüberschlag zu vermeiden).

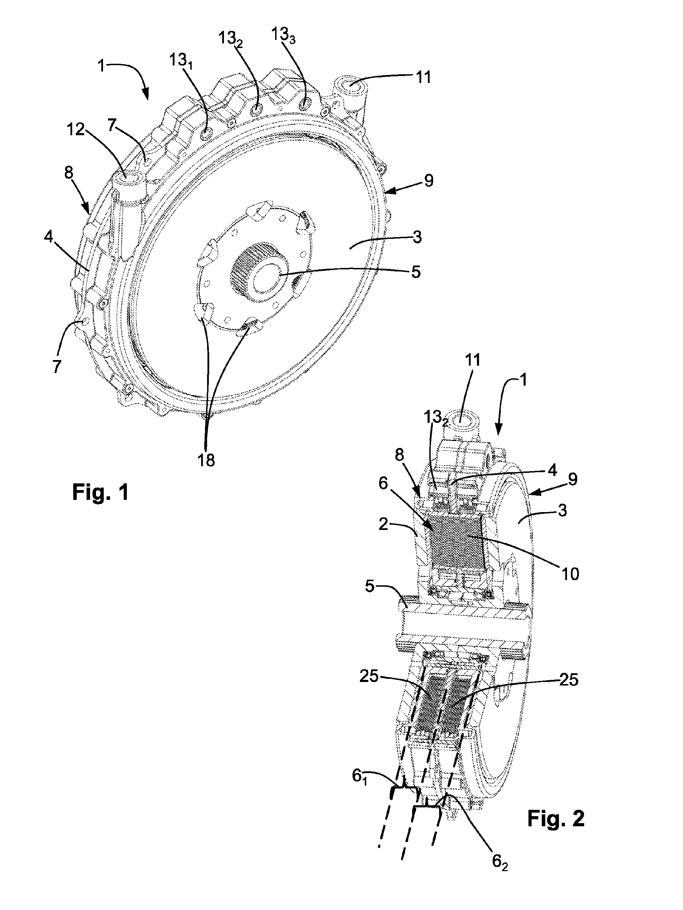

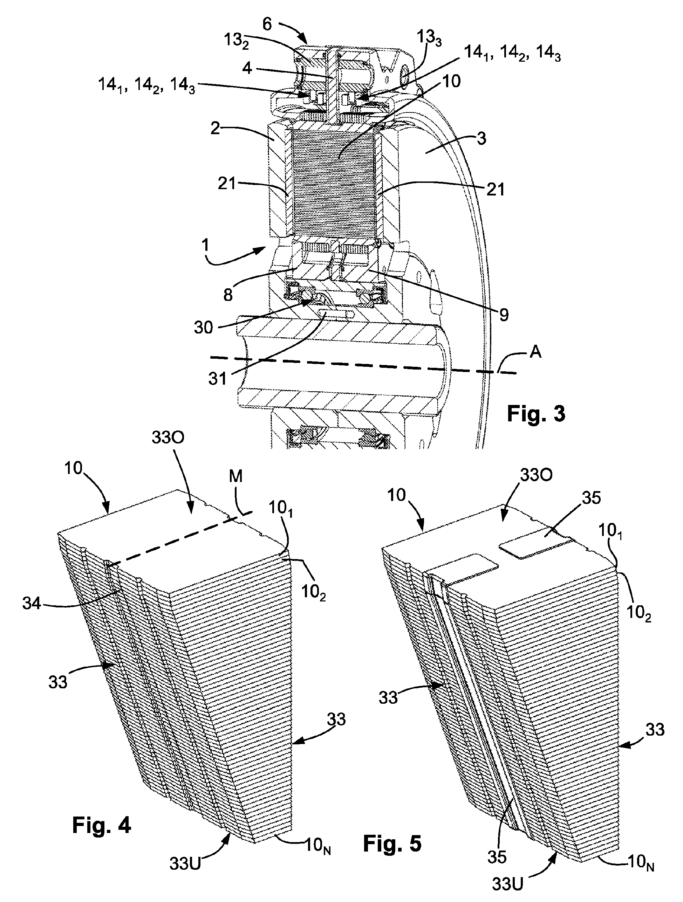

**Figur 1** zeigt eine perspektivische Ansicht einer Axialflussmaschine 1. Die Axialflussmaschine 1 umfasst eine erste Rotorscheibe 2 (siehe Fig. 2 und 3) und eine zweite Rotorscheibe 3, die auf einer zentralen Antriebswelle 5 (bzw. Getriebeeingangswelle) sitzen. Zwischen der ersten Rotorscheibe 2 und der zweiten Rotorscheibe 3 befindet sich ein einziger zentraler Trägerflansch 4 für einen Stator 6 (siehe Fig. 2). Der zentrale Trägerflansch 4 hat mehrere Anschlussbohrungen 7 für die Befestigung der Axialflussmaschine 1 (elektrischer Motor) an einem Getriebegehäuse (nicht dargestellt). Am zentralen Trägerflansch 4 ist ein erster, linker Statordeckel 8 und ein zweiter, rechter Statordeckel 9 befestigt. Der erste, linke Statordeckel 8 hat einen ersten Anschluss 11 für Kühlmedium und der zweite, rechte Statordeckel 9 hat einen zweiten Anschluss 12 für Kühlmedium ausgebildet. Ferner hat die Axialflussmaschine 1 drei Phasenanschlüsse 13₁, 13₂, und 13s für die Stromversorgung ausgebildet. Die erste Rotorscheibe 2 und die zweite Rotorscheibe 3 haben Belüftungsöffnungen 18 zur Kühlung von Eisenkernen 10 (siehe z.B. Fig. 2) des Stators 6 ausgebildet.

**Figur 2** zeigt. eine perspektivische Ansicht der Axialflussmaschine 1 aus Fig. 1 im Teilschnitt. Der Teilschnitt ist derart gelegt, dass er durch den zweiten Phasenanschluss 13₂, einen Eisenkern 10 des Stators 6, die Antriebswelle 5 und eine der gewickelten Spulen 25 verläuft. Die gewickelten Spulen 25 sind in der ersten Statorhälfte 6₁ und der zweiten Statorhälfte 6₂ vorgesehen. Zwischen der ersten Rotorscheibe 2 und der zweiten Rotorscheibe 3 befindet sich der einzige zentrale Trägerflansch 4 mit den gehalterten Eisenkernen 10 für den Stator 6. Ebenso ist in dieser Darstellung der erste Anschluss 11 für Kühlflüssigkeit bzw. Kühlmedium zu erkennen.

**Figur 3** zeigt eine vergrößerte perspektivische Ansicht der Axialflussmaschine 1 aus Fig. 1 im Teilschnitt. Bei dieser Darstellung ist die Antriebswelle 5 entfernt. Der erste, linke Statordeckel 8 und der zweite, rechte Statordeckel 9 sitzen bei dieser Ausführungsform auf einer Lagerhülse 30. Für den Fall, dass bei der Axialflussmaschine 1 kleine Lagerkräfte auftreten, kann auf die Lagerhülse 30 bzw. Nabe als zusätzliches Bauteil verzichtet werden. Die benötigten Sitze für Lager und Wellendichtringe können dann im ersten, linken Statordeckel 8 und zweiten, rechten Statordeckel 9 integriert sein. Die erste Rotorscheibe 2 und die zweite Rotorscheibe 3 tragen jeweils mehrere Magnete 21 (Permanentmagnete), die beidseitig in Richtung der Achse A gegenüber den Eisenkernen 10 des Stators 6 angeordnet sind. Der erste, linke Statordeckel 8 und zweite, rechte Statordeckel 9 haben die Phasenanschlüsse 13₁, 13₂, oder 13s und die entsprechende Anzahl an Phasenringen 14₁, 14₂ oder 14₃ aufgenommen, die der Anzahl der an Drehstromphasen der Axialflussmaschine 1 entspricht. Obwohl hier drei Phasenanschlüsse 13₁, 13₂, oder 13s und drei entsprechende Phasenringe 14₁, 14₂ oder 14s dargestellt sind, soll dies nicht als eine Beschränkung der Erfindung aufgefasst werden. Ein erste Rotorscheibe 2 und die zweite Rotorscheibe 3 können gemäß einer möglichen Ausführungsform der Erfindung über mindestens einen Passstifft 31 zueinander ausgerichtet werden. Über Lager 32 sind die erste Rotorscheibe 2 und die zweite Rotorscheibe 3 drehbeweglich gegenüber dem Stator 6.

In **Figur 4** und **Figur 5** sind perspektivische Ansichten eines Eisenkerns 10 dargestellt, wie dieser bei der der erfindungsgemäßen Axialflussmaschine 1 verbaut ist. Aus der perspektivischen Ansicht der **Figur 4** ist zu entnehmen, dass der Eisenkern 10 die Form eines Kreisringsektors besitzt. Der Eisenkern 10 selbst ist aus mehreren Blechen (Elektroblechen) 10₁, 10₂,...,10_{N} aufgebaut. Die einzelnen Bleche 10₁, 10₂,...,10_{N} bestehen aus einer Backlackbeschichtung. Im gestapelten Zustand werden die einzelnen Bleche 10₁, 10₂,...,10_{N} zu dem festen Eisenkern 10 in Form des Kreisringsektors verbacken. Jeder Eisenkern 10 definiert zwei seitliche Seitenflächen 33, eine obere Seitenfläche 33O und eine untere Seitenfläche 33U, die die beiden seitlichen Seitenflächen 33 miteinander verbinden. In der Mitte weist der Eisenkern 10 an beiden seitlichen Seitenflächen 33 eine Nut 34 auf. Der Darstellung der **Figur 5** ist zu entnehmen, dass die zentrale Nut 34 des Eisenkerns 10 einen Isolator 35 aufgebracht hat. Der Isolator 35 im Bereich der Nut 34 kann ein abriebfester Isolator 35, wie z.B. ein einseitig klebendes Kevlarband, sein.

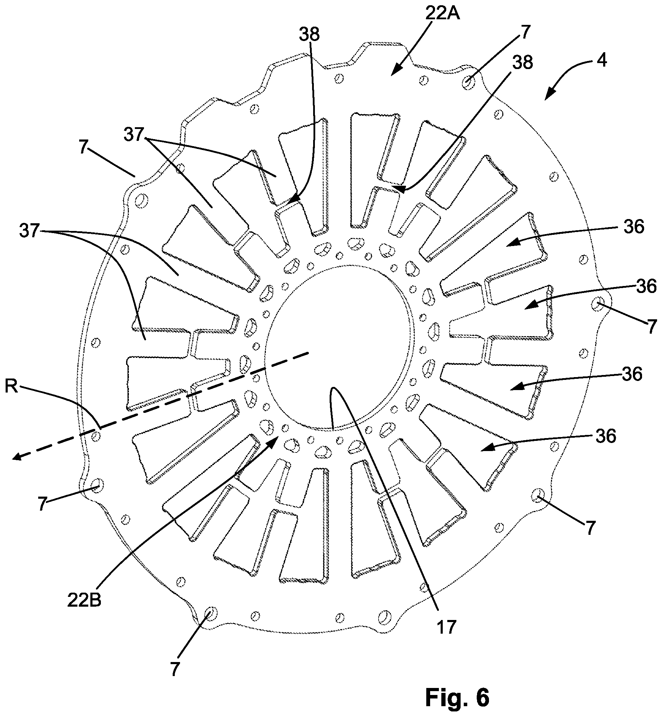

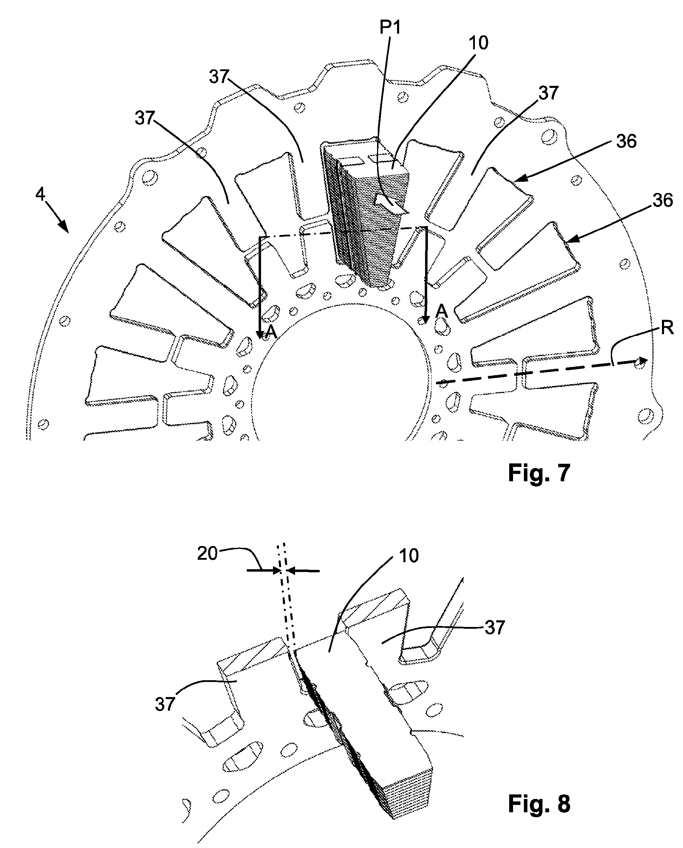

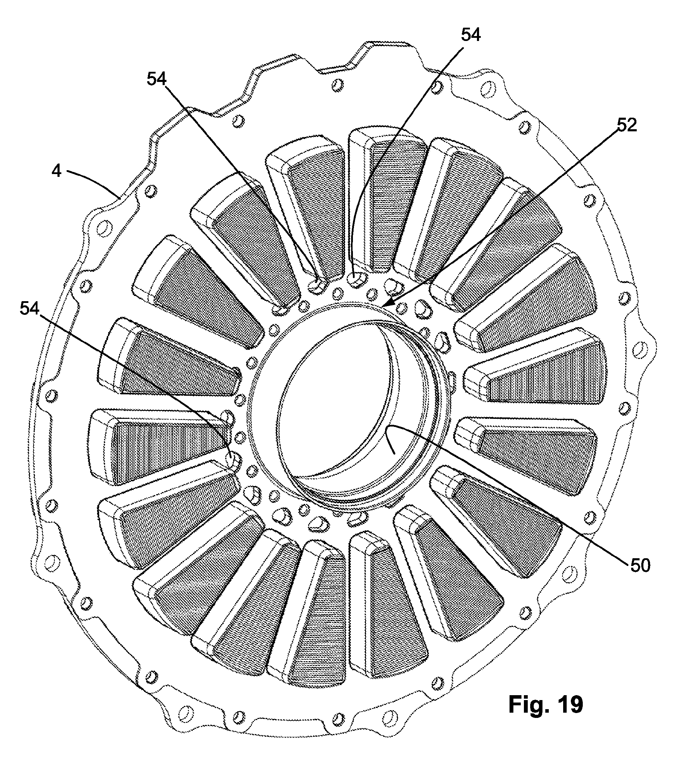

**Figur 6** zeigt eine perspektivische Ansicht des einzigen Trägerflansches 4, der im Stator 6 der Axialflussmaschine 1 verbaut werden kann. Der Trägerflansch 4 dient zur Halterung der Vielzahl von Eisenkernen 10. Hierzu hat der Trägerflansch 4 eine Vielzahl von gleichen Fensteraussparungen 36 ausgebildet. Die Eisenkerne 10 (siehe Figuren 7 bis 15) werden in den Fensteraussparungen 36 des einteiligen Trägerflansches 4 montiert bzw. gehaltert und sind somit homogen um eine zentrale Öffnung 17 des Trägerflansches 4 herum verteilt angeordnet. Die zentrale Öffnung 17 dient zur Aufnahme des Trägerflansches 4 auf einer Nabe 50 (siehe Fig. 19).

Die Fensteraussparungen 36 sind durch Stege 37 voneinander getrennt. Die Stege 37 verlaufen in radialer Richtung R von einem äußeren Ring 22A zu einem inneren Ring 22B. Einige der Stege 37 sind durch einen Luftspalt 38 voneinander getrennt. Ohne die Luftspalte 38 würden die Stege 37 geschlossene Ringe darstellen, welche die Eisenkerne 10 umfassen. Dies entspräche dann einer Spule mit genau einer Windung, die jeden der Eisenkerne 10 umfassen würde. Aufgrund des wechselnden Magnetfeldes würde in den jeweiligen Eisenkernen 10 so ein hoher Strom in diese Ringe induziert werden, was zu starker Erwärmung und hohen Wirkungsgradverlusten führen würde. Durch die Luftspalte 38 in den Stegen 37 wird ein solcher Effekt vermieden.

Bei diesem hier beschriebenen Ausführungsbeispiel handelt es sich um einen 3-Phasen Drehstrommotor (Axialflussmaschine 1). Da die Summe der Induktionen der drei Phasen wieder Null ergibt, darf jeder dritte Steg 37 ohne Luftspalt 38 ausgeführt werden. Um zusätzlich einer Wirbelstrombildung im Trägerflansch 4 vorzubeugen, wird dieser vorzugsweise aus einem schwach bis nicht magnetischen Werkstoff hergestellt, welcher gleichzeitig einen hohen spezifischen elektrischen Widerstand aufweist. Chrom-Nickel-Stähle, wie z.B. V2A- oder V4A-Stahl, weisen diese entsprechenden Eigenschaften auf. Der Trägerflansch 4 hat die mehreren Anschlussbohrungen 7 für die Befestigung der Axialflussmaschine 1 (elektrischer Motor) an einem Getriebegehäuse (nicht dargestellt) am äußeren Ring 22A ausgebildet.

In den Darstellungen der **Figuren 7** bis **14** ist die Montage der einzelnen Eisenkerne 10 in den jeweiligen Fensteraussparungen 36 des Trägerflansches 4 dargestellt. Die Fensteraussparungen 36 sind so ausgelegt, dass die Stege 37 formschlüssig in die beiden mittigen Nuten 34 des jeweiligen Eisenkerns 10 eingreifen. Damit die Eisenkerne 10 mit genügend Fügespiel in die Fensteraussparungen 36 eingeschoben werden können, sind die Fensteraussparungen 36 in radialer Richtung R nach außen etwas verlängert bzw. vergrößert.

**Figur 7** zeigt eine perspektivische Ansicht des Trägerflansches 4 mit dem Eisenkern 10 aus Fig. 5 in der Einführstellung von einer der Fensteraussparungen 36. Die in **Figur 8** gezeigte Darstellung ist eine vergrößerte, perspektivische Schnittansicht entlang der in Fig. 7 gezeigten Linie A-A. Der Eisenkern 10 besitzt ein Spiel 20 zumindest gegenüber den Stegen 37, so dass dieser ohne Beschädigung und leicht in die Fensteraussparungen 36 eingeschoben werden kann. Der Eisenkern 10 wird in Richtung des Pfeils P1 in die Fensteraussparungen 36 eingeschoben.

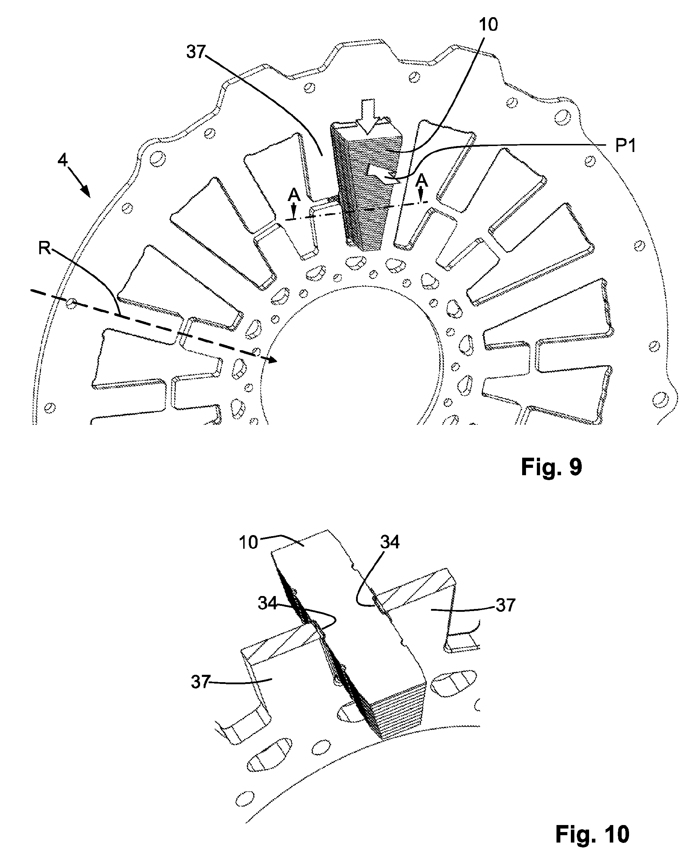

**Figur 9** zeigt eine perspektivische Ansicht des Trägerflansches 4 mit dem Eisenkern10 in der vollkommen eingeschobenen Position im Trägerflansch 4. Der Eisenkern10 ist in der Position angekommen, bei der die Stege 37 mit der Nut 34 fluchten. In dieser Position werden die Eisenkerne 10 in radialer Richtung R nach innen gedrückt. **Figur 10** zeigt eine vergrößerte, perspektivische Schnittansicht entlang der in Fig. 9 gezeigten Linie A-A. Die Nut 34 fluchtet mit den Stegen 37 und das Spiel 20 (siehe Fig. 8) zwischen dem Eisenkern 10 und den Stegen 37 ist verringert.

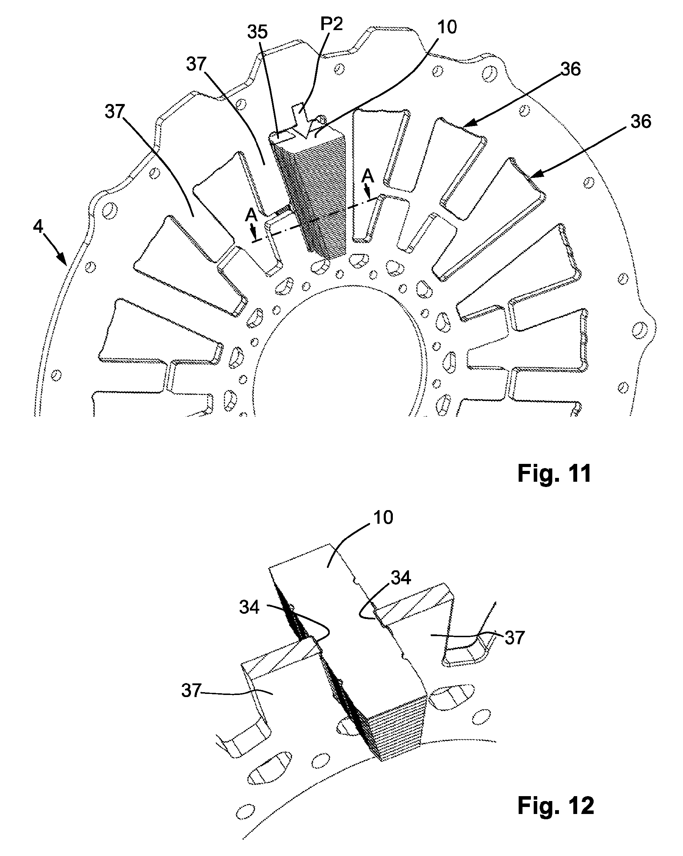

**Figur 11** zeigt eine perspektivische Ansicht des Trägerflansches 4, bei der sich der Eisenkern 10 in der Arbeitsposition befindet. Der Eisenkern 10 wird in Richtung des Pfeils P2 in Richtung des Zentrums des Trägerflansches 4 gedrückt. Die in **Figur 12** gezeigte Darstellung ist eine vergrößerte, perspektivische Schnittansicht entlang der in Fig. 11 gezeigten Linie A-A. Hier ist deutlich zu erkennen, dass aufgrund der keilförmigen Geometrie der Fensteraussparungen 36 die Stege 37 an der vertieften Nut 34 des Eisenkerns 10 anliegen. Der Isolator 35 (Isolierband) in der Nut 34 verhindert den direkten Kontakt der Stege 37 mit den Blechen 10₁, 10₂,...,10_{N} des Eisenkerns 10. So wird sichergestellt, dass die einzelnen Bleche 10₁, 10₂,...,10_{N} des Eisenkerns 10 nicht miteinander kurzgeschlossen werden.

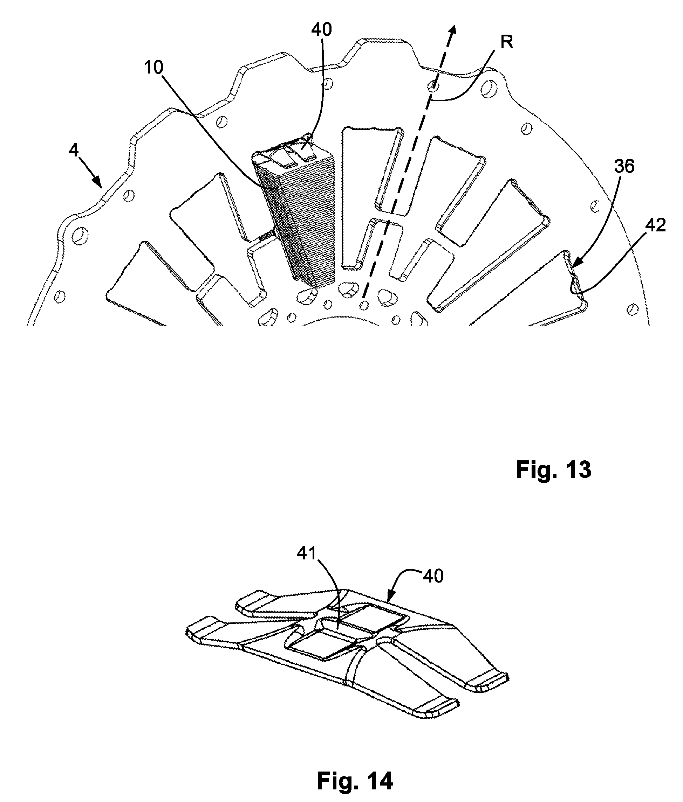

**Figur 13** zeigt eine perspektivische Ansicht des Trägerflansches 4, bei der der Eisenkern 10 mit einem Sicherungselement 40 in der Arbeitsposition im Trägerflansch 4 gesichert ist. **Figur 14** zeigt eine perspektivische und vergrößerte Ansicht des Sicherungselements 40. Das Sicherungselement 40 kann z.B. durch eine Blattfeder realisiert werden, welches nach der Positionierung des Eisenkerns 10 eingeschoben wird und den Eisenkern 10 unter Vorspannkraft in radialer Richtung R fixiert. Bei der hier gezeigten Ausführungsform ist das Sicherungselement 40 H-förmig ausgebildet. Das Sicherungselement 40 besitzt ein Positionierelement 41, das mit einem entsprechenden Gegenstück 42 an der kreisringsegmentförmigen Fensteraussparung 36 des Trägerflansches 4 formschlüssig zusammenwirkt.

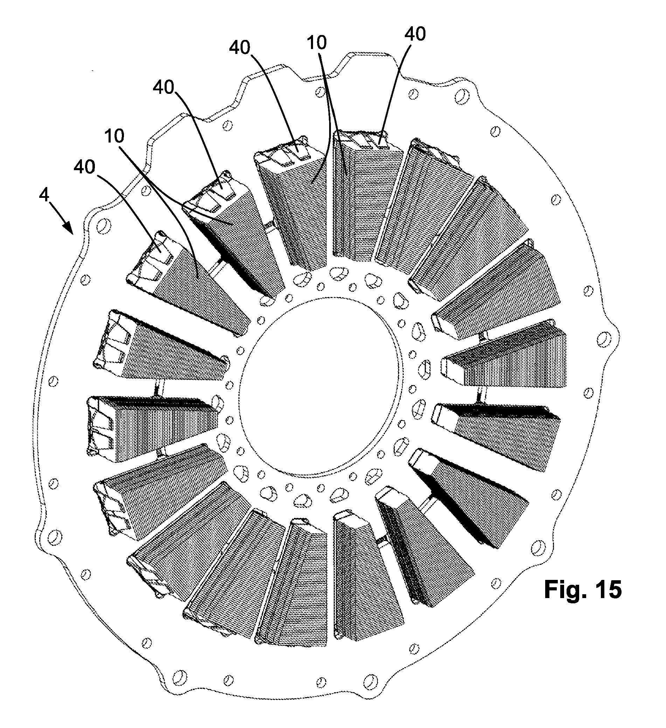

**Figur 15** zeigt eine perspektivische Teilansicht des Trägerflansches 4 mit der Vielzahl von montierten Eisenkernen 10. Jeder der Eisenkerne 10 wird durch ein Sicherungselement 40 im Trägerflansch 4 gesichert.

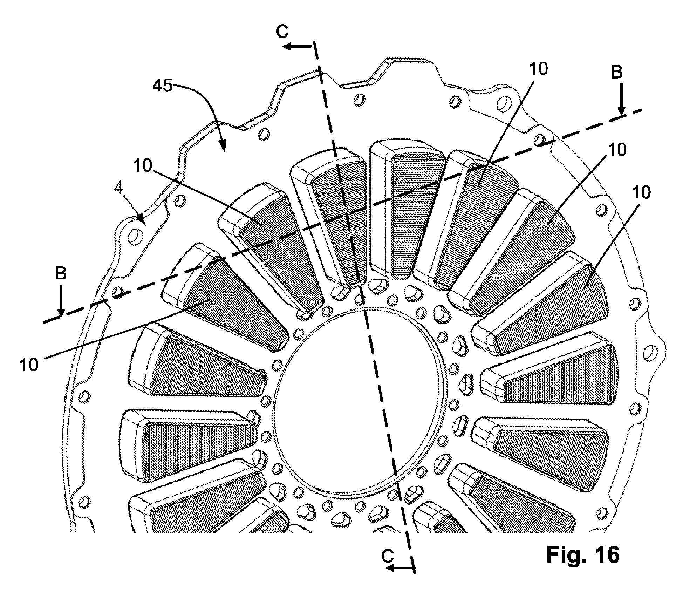

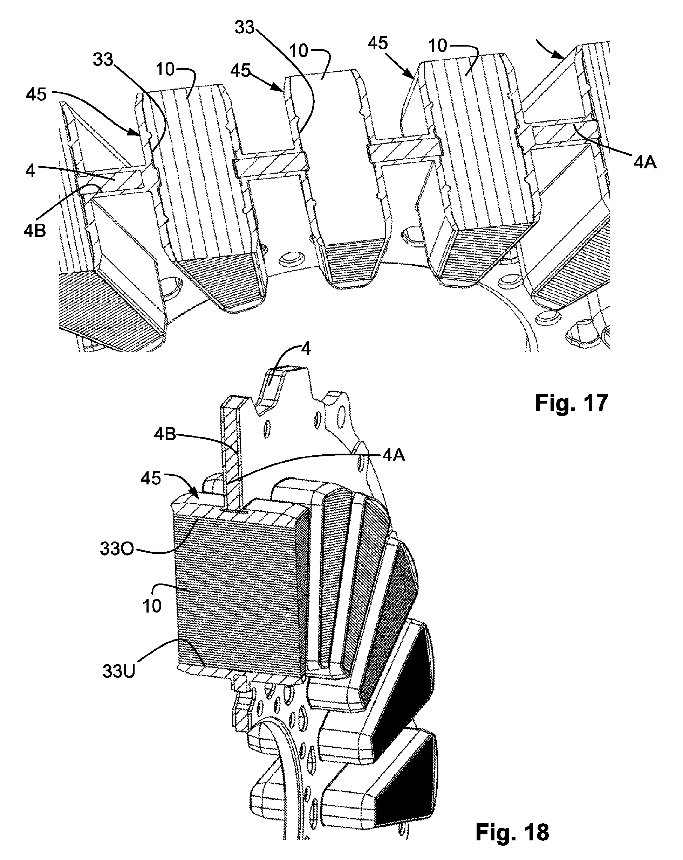

**Figur 16** zeigt eine perspektivische Teilansicht des Trägerflansches 4 mit den montierten Eisenkernen 10, die mit einem Kunststoff 45 zumindest teilweise umspritzt sind. Durch das Umspritzen der Eisenkerne 10 ergibt sich eine 100% Dichtigkeit, die für das Kühlkonzept erforderlich ist. Durch das Umspritzen werden alle Eisenkerne 10 und deren Sicherungselemente 40 endgültig in ihrer Position im Trägerflansch 4 "eingefroren". **Figur 17** zeigt eine vergrößerte Schnittansicht entlang der in Fig. 16 dargestellten Schnittlinie B-B. **Figur 18** zeigt eine vergrößerte Schnittansicht entlang der in Fig. 16 dargestellten Schnittlinie C-C. Aus den Figuren 17 und 18 ist erkennbar, dass der umspritzte Kunststoff 45 an den Seitenflächen 33 der Eisenkerne 10 sowie an den oberen Seitenflächen 33O und den unteren Seitenflächen 33U an den Eisenkernen 10 anliegt. Ebenso liegt der umspritzte Kunststoff 45 an den beiden Seiten 4A und 4B des Trägerflansches 4 an.

**Figur 19** zeigt eine perspektivische Teilansicht des umspritzten Trägerflansches 4 auf einer Nabe 50. Die Nabe 50 bzw. die Lagerhülse 30 (siehe Fig. 3) kann z.B. mit einer Lasernaht 52 am Trägerflansche 4 montiert werden. Der umspritzte Trägerflansch 4 hat Durchflussöffnungen 54 für das Kühlmedium ausgebildet.

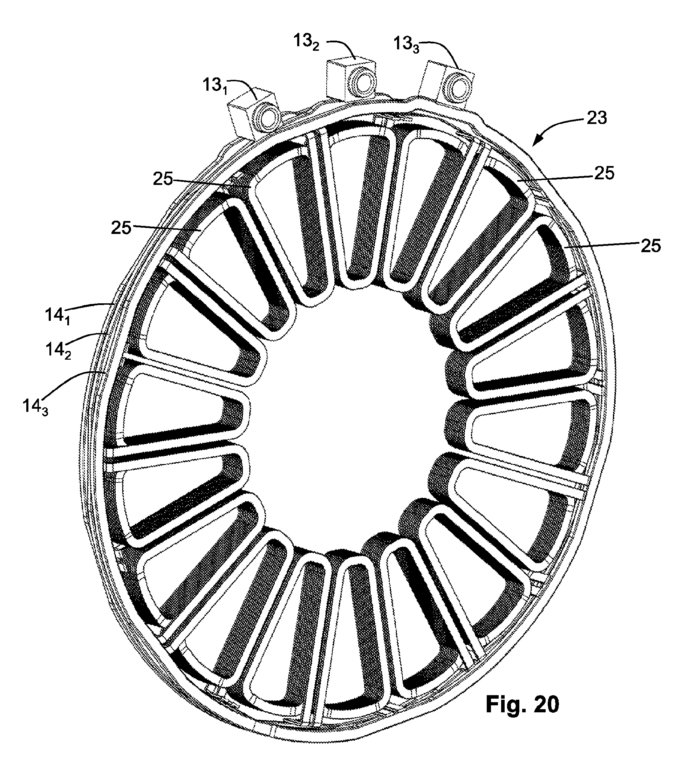

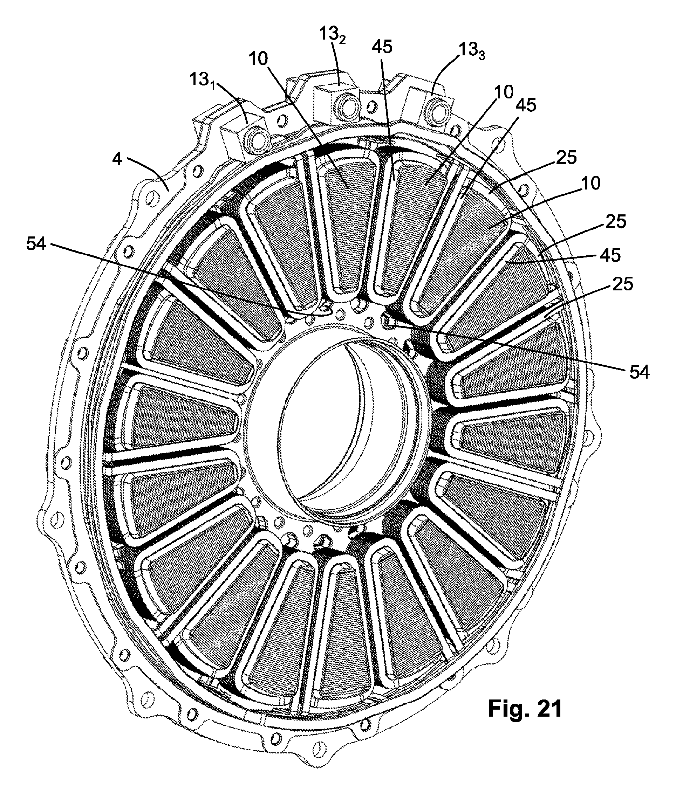

**Figur 20** zeigt eine perspektivische Teilansicht einer Spuleneinheit 23 der vormontierten Spulen 25, die auf das Bauteil (umspritzter Trägerflansch 4 mit Eisenkernen 10) aus Fig. 19 aufgeschoben werden. Die vormontierten Spulen 25 besitzen ferner drei Phasenanschlüsse 13₁, 13₂ und 13s und die drei zugeordneten Phasenringe 14₁, 14₂ und 14s. Die Spulen 25 können vorzugsweise aus hochkant gewickeltem Flachdraht hergestellt sein. Wie aus der Figur 21 ersichtlich ist, umgibt jede der Spulen 25 jeweils einen Eisenkern 10 und liegt dabei an dem Kunststoff 45 an. Die gewickelten Spulen 25 sind derart geformt, dass sie die Form des Kreisringsektors der Eisenkerne 10 umgreifen. Die vormontierten Spulen 25 sind beidseits des Trägerflansches 4 mit den Eisenkernen 10 angebracht. Die auf das Bauteil (umspritzter Trägerflansch 4 mit Eisenkernen 10) montierten Spulen 25 lassen dabei die Durchflussöffnungen 54 für die Kühlflüssigkeit im Trägerflansch 4 frei.

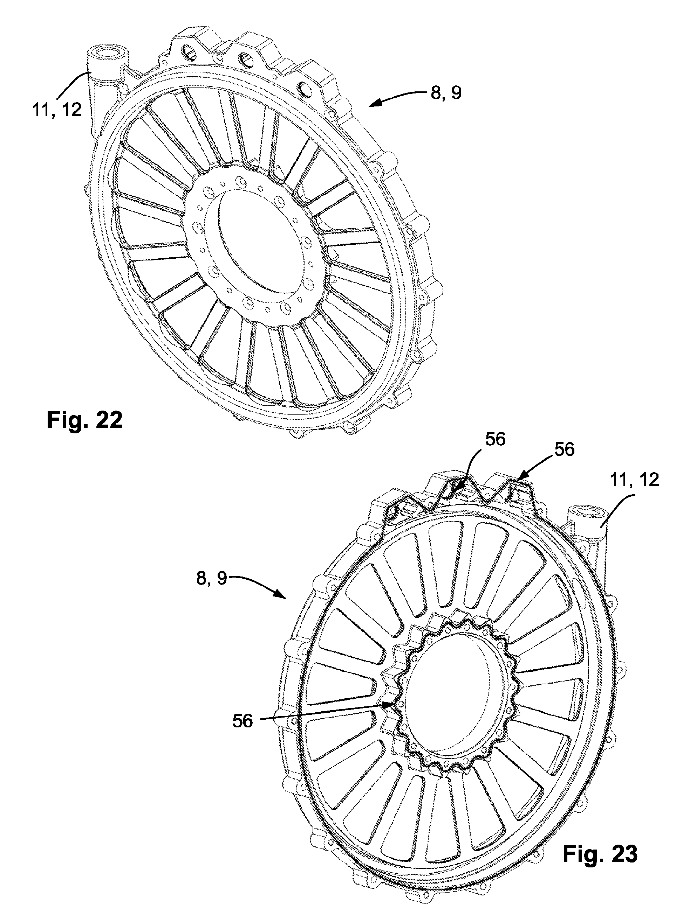

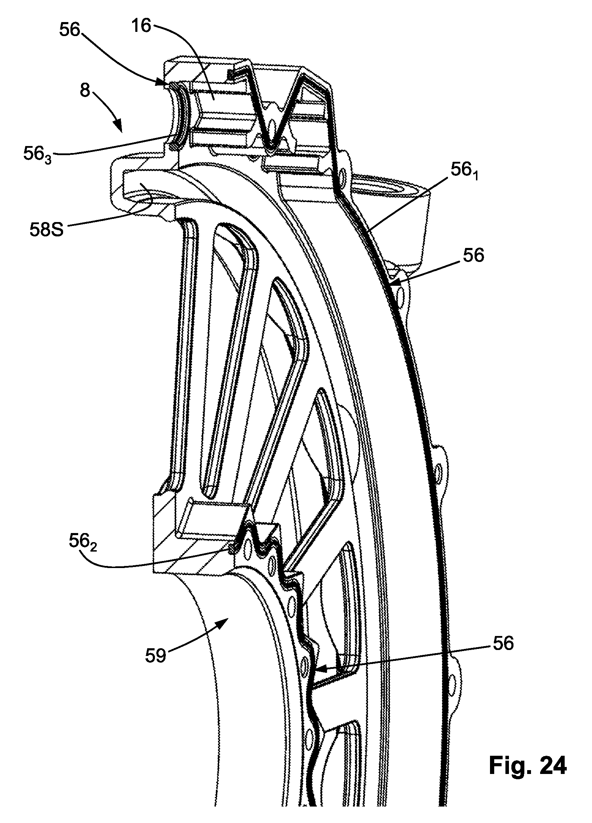

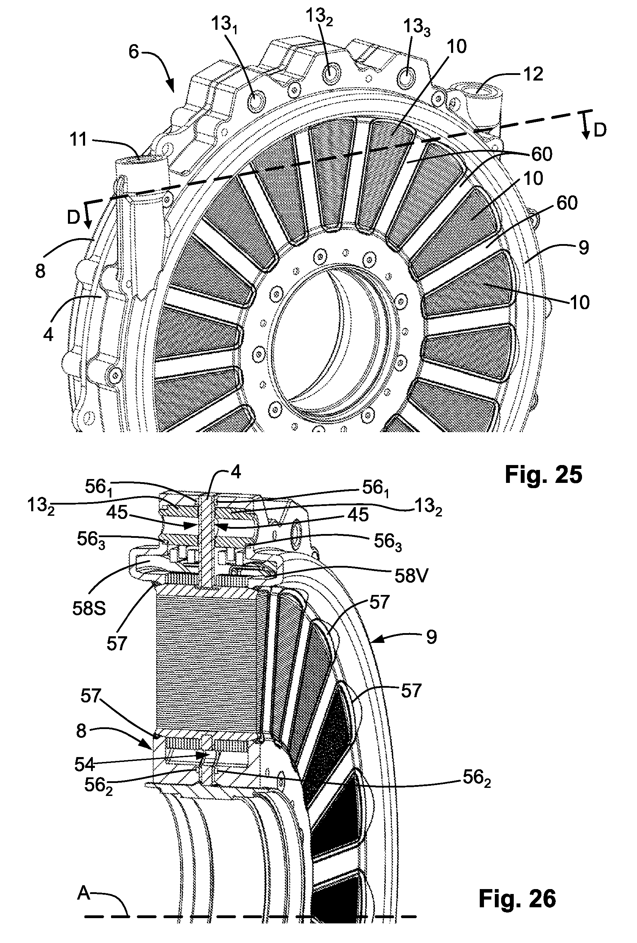

**Figur 22** und **Figur 23** zeigen verschiedene perspektivische Ansichten des ersten, linken Statordeckels 8 bzw. des zweiten, rechten Statordeckels 9. **Figur 22** zeigt eine perspektivische Außenansicht des ersten, linken Statordeckels 8 bzw. des zweiten, rechten Statordeckels 9 und **Figur 23** zeigt eine perspektivische Innenansicht eines der beiden Statordeckel 8 oder 9. Jeder der Statordeckel 8 oder 9 wird aus Kunststoff, wie z.B. vorzugsweise im 2K-Spritzgussverfahren, hergestellt. Somit können im 2K-Spritzgussverfahren bereits Dichtgeometrien 56 in Form von Elastomerbereichen integriert werden. Die Dichtgeometrien 56 können komplex ausgebildet sein. Ebenso wird beim Spritzgussverfahren der Statordeckel 8 oder 9 auch gleich der erste Anschluss 11 oder der zweite Anschluss 12 für das Kühlmedium ausgebildet. **Figur 24** zeigt eine perspektivische Teilansicht des ersten Statordeckels 8 im Teilschnitt. Der erste Statordeckel 8 hat einen Sammelkanal 58S für den Rücklauf der Kühlflüssigkeit bzw. des Kühlmediums ausgebildet. Der zweite Statordeckel 9 (hier nicht dargestellt) hat einen Verteilkanal 58V für den Zulauf der Kühlflüssigkeit bzw. des Kühlmediums ausgebildet (siehe Figur 26). Die Dichtgeometrien 56 sind auf der dem Stator 6 zugewandten Seite des Statordeckels 8 oder 9 angeordnet. Zumindest verläuft eine erste umlaufende Elastomerdichtung 56₁ im Bereich des äußeren Umfangs des Statordeckels 8 oder 9. Eine zweite umlaufende Elastomerdichtung 56₂ ist um eine Öffnung 59 herum für die Nabe 50 (siehe Fig. 19) angeordnet. Eine weitere Elastomerdichtung 56s ist im Statordeckel 8 oder 9 in jeder Aufnahme 16 derart ausgebildet, dass sie bei den montierten Statordeckeln 8 und 9 um den jeweiligen Phasenanschluss 13₁, 13₂ und 13s herum anliegt.

**Figur 25** zeigt eine perspektivische Teilansicht des Aufbaus des Stators 6 mit dem montierten ersten, linken Statordeckel 8 und dem zweiten, rechten Statordeckel 9. Die beiden Statordeckel 8 und 9 werden auf beiden Seiten des zentralen Trägerflansches 4 derart aufgeschoben, dass die beiden Statordeckel 8 und 9, die am zentralen Trägerflansch 4 anliegen, die Phasenanschlüsse 13₁, 13₂ und 13₃ umschließen. Die Speichen 60 eines jeden Statordeckels 8 und 9 kommen zwischen den einzelnen Eisenkernen 10 des Stators 6 zu liegen. Der erste, linke Statordeckel 8 hat den ersten Anschluss 11 für Kühlmedium (wie z.B. einen Rücklauf für Kühlmedium) ausgebildet. Der zweite, rechte Statordeckel 9 hat den zweiten Anschluss 12 für Kühlmedium (wie z.B. einen Zulauf für Kühlmedium) ausgebildet. Der erste, linken Statordeckel 8 und der zweite, rechte Statordeckel 9 werden mit mehreren Schraubverbindungen 62 gegeneinander verschraubt und somit sicher am Stator 6 gehaltert. Dies unterstützt auch die Dichtwirkung der ersten umlaufenden Elastomerdichtung 56₁, der zweiten umlaufenden Elastomerdichtung 56₂ und der weiteren Elastomerdichtung 56s des ersten, linken Statordeckels 8 und des zweiten, rechten Statordeckels 9.

**Figur 26** zeigt eine perspektivische Teilansicht eines Schnitts entlang der Achse A des Aufbaus aus Fig. 25, aus der die dichtende Wirkung der ersten umlaufenden Elastomerdichtung 56₁, der zweiten umlaufenden Elastomerdichtung 56₂ und der weiteren Elastomerdichtungen 56s des ersten, linken Statordeckels 8 und des zweiten, rechten Statordeckels 9 erkennbar ist. Die erste umlaufende Elastomerdichtung 56₁ und die zweite umlaufende Elastomerdichtung 56₂ liegen dabei umlaufend an dem Kunststoff 45 an, mit dem der Trägerflansch 4 umspritzt ist. Die zweite umlaufende Elastomerdichtung 56₂ dichtet die Durchflußöffnungen 54 im Trägerflansch 4 ab. Die weiteren Elastomerdichtungen 56₃ umschließen die Phasenanschlüsse 13₁, 13₂ bzw. 13s. Zum Abdichten der beiden Statordeckel 8 und 9 an den Bereichen der Eisenkerne 10, die mit dem Kunststoff 45 umspritzt sind, können umlaufende Nuten/Kerben ausgebildet sein, in welche nachträglich ein Dichtmittel 57 (wie z.B. Dichtkleber) eingebracht wird. Der Sammelkanal 58S des ersten linken Statordeckels 8 fungiert als Sammelkanal für den Rücklauf des Kühlmediums. Der Verteilkanal 58V des zweiten, rechten Statordeckels 9 fungiert als Verteilkanal für einen Zulauf des Kühlmediums.

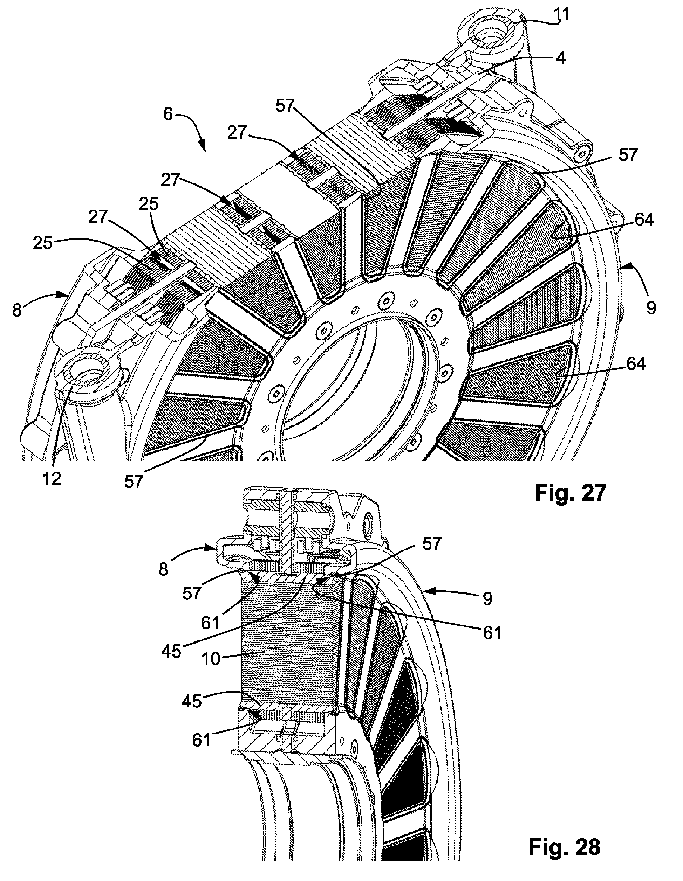

**Figur 27** zeigt eine vergrößerte Schnittansicht entlang der in Fig. 25 dargestellten Schnittlinie D-D. **Figur 28** zeigt eine perspektivische Teilansicht eines Schnitts entlang der Achse A des Aufbaus analog zu Fig. 26. Die beiden Schnittansichten der Fig. 27 und Fig. 28 zeigen die Anbringung eines Dichtmittels 57 zur Abdichtung des ersten, linken Statordeckels 8 und des zweiten, rechten Statordeckels 9. Das Dichtmittel 57 wird um Ausparungen 64 des ersten, linken Statordeckels 8 und des zweiten, rechten Statordeckels 9 vorgesehen. Wie aus Fig. 27 zu erkennen ist, dienen Spalten 27 zwischen den Spulen 25 als Kühlkanäle. Gemäß einer möglichen Ausführungsform der gegenwärtigen Erfindung kann das Dichtmittel 57 als Dichtkleber ausgestaltet sein. Über den ersten Anschluss 11 für das Kühlmedium und den zweiten Anschluss 12 kann an den durch den ersten, linke Statordeckel 8 und den zweiten, rechten Statordeckel 9 definierten Innenraum des Stators 6 ein Unterdruck angelegt werden. Auf diese Weise wird das als Dichtkleber ausgebildete Dichtmittel 57 bis in die Wurzel der umlaufenden Nuten/Kerben 61 (Klebenuten) "gesaugt", wodurch die bestmögliche Benetzung der Spalten 27 erreicht wird. Ebenso wird das Dichtmittel 57 (wie z.B. Dichtkleber) in die Nuten/Kerben 61 der Speichen 60 der beiden Statordeckel 8 und 9 und in den Bereichen der Eisenkerne 10, die mit dem Kunststoff 45 umspritzt sind, eingebracht. Gemäß einer möglichen weiteren Ausführungsform ist es denkbar, dass das Dichtmittel 57 in Form einer Elastomerdichtung ausgebildet ist. Diese würde dann ebenfalls bereits bei der Herstellung der Statordeckel 8 und 9 durch Anspritzen realisiert - allerdings dann nicht, wie in Fig. 27 dargestellt, an der Außenseite der Statordeckel 8 und 9, sondern auf der dem Innenraum des Stators 6 der zugewandten Seite der Statordeckel 8 und 9.

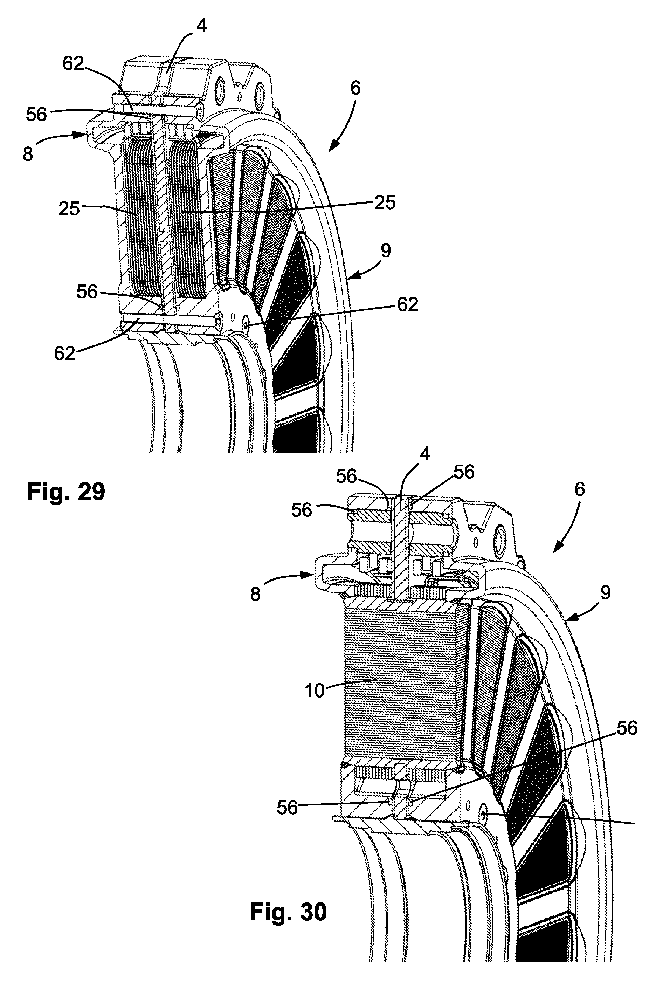

**Figur 29** zeigt eine perspektivische Teilansicht eines Schnitts durch den Aufbau des Stators 6 entlang einer Spule 25 des Stators 6. **Figur 30** zeigt eine perspektivische Teilansicht eines Schnitts durch den Aufbau des Stators 6 entlang eines Eisenkerns 10. Aufgrund von mehreren Schraubverbindungen 62 zwischen dem ersten Statordeckel 8 und dem zweiten Statordeckel 9 sowie den Verbindungen durch Dichtgeometrien 56, wird der Stator 6 zu einem soliden und belastbaren Gebilde. Der Stator 6 kann somit sämtlicher Lagerkräfte aufnehmen.

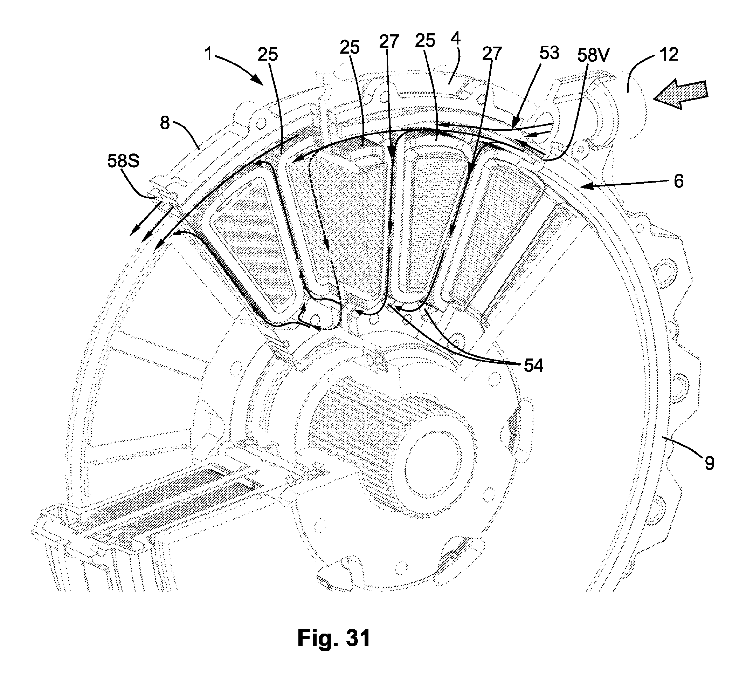

**Figur 31** zeigt eine perspektivische Teilansicht der Axialflussmaschine 1, bei der Teile weggebrochen sind, um den inneren Aufbau und eine Kühlmittelströmung 53 (Strömungsverlauf des Kühlmediums) im Stator 6 zu verdeutlichen. Das kalte Kühlmedium (wie z.B. Öl) gelangt über den zweiten Anschluss 12 des zweiten, rechten Statordeckels 9 in die zweite Hälfte des Innenraums des Stators 6. Der umlaufende Verteilkanal 58V des zweiten, rechten Statordeckels 9 gewährleistet, dass das "frische" Kühlmedium gleichermaßen alle Spulen 25 erreicht. Das Design des Stators 6 sieht vor, dass jede Spule 25 zu ihren benachbarten Spulen 25 beabstandet ist, so, dass zwischen zwei Spulen 25 immer ein Spalt 27 vorliegt. Durch diese Spalte 27 fließt nun das Kühlmedium von radial außen nach radial innen. Radial innen angekommen, gelangt das Kühlmedium über die vorgesehenen Durchflussöffnung 54 des zentralen Trägerflansches 4 in die erste Statorhälfte 6₁ des Stators 6, um von hier aus durch die Spalten 27 zwischen den Spulen 25 der zweiten Statorhälfte 6₂ des Stators 6 wieder radial nach außen zu strömen.

Das mittlerweile erwärmte Kühlmedium gelangt anschließend über den Sammelkanal 58S des ersten linken Statordeckels 8 zum ersten Anschluss 11 (nicht ersichtlich) des ersten, linken Statordeckles 8.

Die oben beschriebene Ausführungsform der Erfindung wurde als Axialflussmaschine 1 hinsichtlich absoluter Dichtigkeit (also für eine Trockenanwendung) konstruiert. Für eine Ausführungsform der Anwendung der Axialflussmaschine 1 in einem Nassraum (z.B. im Getriebe integriert) könnte das Getriebeöl als Kühlmedium verwendet werden. Folglich könnten viele der Dichtgeometrien 56 bzw. Dichtmittel 57, wie z.B. die Verklebungen der beiden Statordeckel 8 und 9, entfallen. Dann hätte die Axialflussmaschine 1 (Motor) zwar gewisse Leckagen, aber der gezielte Strömungsverlauf des Kühlmediums durch den Innenraum des Stators 6 bliebe trotzdem erhalten.

Es wird angenommen, dass die vorliegende Offenbarung und viele der darin erwähnten Vorteile durch die vorhergehende Beschreibung verständlich werden. Es ist offensichtlich, dass verschiedene Änderungen in Form, Konstruktion und Anordnung der Bauteile durchgeführt werden können, ohne von dem offenbarten Gegenstand abzuweichen. Die beschriebene Form ist lediglich erklärend, und es ist die Absicht der beigefügten Ansprüche, solche Änderungen zu umfassen und einzuschließen. Dementsprechend sollte der Umfang der Erfindung nur durch die beigefügten Ansprüche beschränkt sein.

### Bezugszeichenliste

- 1: Axialflussmaschine
- 2: erste Rotorscheibe
- 3: zweite Rotorscheibe
- 4: zentraler Trägerflansch
- 4A: erste Seitenfläche
- 4B: zweite Seitenfläche
- 5: Antriebswelle
- 6: Stator
- 6₁: erste Statorhälfte
- 6₂: zweite Statorhälfte
- 7: Anschlussbohrung
- 8: erster, linker Statordeckel
- 9: zweiter, rechter Statordeckel
- 10: Eisenkern
- 10₁, 10₂,...,10_{N}: Blech
- 11: erster Anschluss
- 12: zweiter Anschluss
- 13₁, 13₂, 13₃: Phasenanschluss
- 14₁, 14₂, 14₃: Phasenring
- 16: Aufnahme
- 17: zentrale Öffnung
- 18: Belüftungsöffnung
- 20: Spiel
- 21: Magnet
- 22A: äußerer Ring
- 22B: innerer Ring
- 23: Spuleneinheit
- 25: Spule
- 27: Spalt
- 30: Lagerhülse
- 31: Passstifft
- 32: Lager
- 33: seitliche Seitenfläche
- 33O: obere Seitenfläche
- 33U: untere Seitenfläche
- 34: Nut
- 35: Isolator
- 36: Fensteraussparung
- 37: Steg
- 38: Luftspalt
- 40: Sicherungselement
- 41: Positionierelement
- 42: Gegenstück
- 45: Kunststoff
- 50: Nabe
- 52: Lasernaht
- 53: Kühlmittelströmung
- 54: Durchflussöffnung
- 56: Dichtgeometrie
- 56₁: erste umlaufende Elastomerdichtung
- 56₂: zweite umlaufende Elastomerdichtung
- 56₃: weitere Elastomerdichtung
- 57: Dichtmittel
- 58S: Sammelkanal
- 58V: Verteilkanal
- 59: Öffnung
- 60: Speiche
- 61: Nuten/Kerben
- 62: Schraubverbindungen
- 64: Aussparung
- A: Achse
- A-A: Schnittlinie
- B-B: Schnittlinie
- C-C: Schnittlinie
- D-D: Schnittlinie
- P1: Pfeil
- P2: Pfeil
- R: radiale Richtung

## Patentansprüche

1. Axialflussmaschine (1), die aufweist:
eine erste Rotorscheibe (2) und eine zweite Rotorscheibe (3),
einen Stator (6), der in Richtung einer Achse (A) der Axialflussmaschine (1) zwischen der ersten Rotorscheibe (2) und der zweiten Rotorscheibe (3) sitzt,
einen zentralen Trägerflansch (4), der in Richtung der Ache (A) eine erste Seitenfläche (4A) und eine zweite Seitenfläche (4B) definiert, den Stator (6) in Richtung der Achse (A) in eine erste Statorhälfte (6₁) und eine zweite Statorhälfte (6₂) teilt und Durchflussöffnungen (54) von der zweiten Statorhälfte (6₂) zu der ersten Statorhälfte (6₁) ausgebildet hat;
einen ersten, linken Statordeckel (8), der an der ersten Seitenfläche (4A) des Trägerflanschs (4) montiert ist und am äußeren Umfang einen Sammelkanal (58S) ausgeformt hat; und
einen zweiten, rechten Statordeckel (9), der an der zweiten Seitenfläche (4A) des Trägerflanschs (4) montiert ist und am äußeren Umfang einen Verteilkanal (58V) ausgeformt hat, wobei
eine Kühlmittelströmung (53) von dem Verteilkanal (58V) durch die Durchflussöffnungen (54) zu dem Sammelkanal (58S) definiert ist,
**dadurch gekennzeichnet, dass**
mehrere Eisenkerne (10) an dem Trägerflansch (4) gehaltert sind und sich zu gleichen Teilen in die erste Statorhälfte (6₁) und die zweite Statorhälfte (6₂) erstrecken, und
jeder der Eisenkerne (10) in der ersten Statorhälfte (6₁) und der zweiten Statorhälfte (6₂) von einer gewickelten Spule (25) derart umschlossen ist, dass jede Spule (25) zu einer ihr benachbarten Spule (25) beabstandet ist, so dass zwischen zwei Spulen (25) immer ein Spalt (27) vorliegt, durch den ein Kühlmittel in der zweiten Statorhälfte (6₂) von radial außen nach radial innen und in der ersten Statorhälfte (6₁) von radial innen nach radial außen fließt.

2. Axialflussmaschine (1) nach Anspruch 1, wobei der Verteilkanal (58V) des zweiten, rechten Statordeckels (9), Spalte (27) zwischen den Spulen (25) der zweiten Statorhälfte (6₂), die Durchflussöffnungen (54), Spalte (27) zwischen den Spulen (25) der ersten Statorhälften (6₁) und der Sammelkanal (58S) des ersten, linken Statordeckels (8) in fluider Kommunikation miteinander sind.

3. Axialflussmaschine (1) nach Anspruch 1 oder 2, wobei der zentrale Trägerflansch (4) mehrere kreisringsegmentartige Fensteraussparungen (36) ausgebildet hat, die durch Stege (37) voneinander getrennt, um eine zentrale Öffnung (17) herum für eine Nabe (50) des Stators (6) homogen verteilt angeordnet sind und in der die kreisringsegmentartigen Eisenkerne (10) mittels einer Nut (34) über die Stege (37) mittig gehaltert sind.

4. Axialflussmaschine (1) nach Anspruch 3, wobei die Nut (34) mit einem Isolator (35) versehen ist.

5. Axialflussmaschine (1) nach Anspruch 4, wobei der Trägerflansch (4) mit montierten Eisenkernen (10) mit einem Kunststoff (45) derart umspritzt ist, dass der Kunststoff (45) beidseitig an einem äußeren Ring (22A), an den Stegen (37) und beidseitig an einem inneren Ring (22B) des Trägerflanschs (4), an einer oberen Seitenfläche (33O), an einer unteren Seitenfläche (33U) und an seitlichen Seitenflächen (33) der Eisenkerne 10 anliegt und Durchflussöffnungen (54) in dem inneren Ring (22B) von dem Kunststoff (45) freigelassen sind.

6. Axialflussmaschine (1) nach Anspruch 5, wobei jede der gewickelten Spulen (25) eine kreisringsegmentartige Form hat und die mit Kunststoff (45) umspritzten, kreisringsegmentartigen Eisenkerne (10) umgibt und der Spalt (27) mit der zugeordneten Durchflussöffnung (54) in dem inneren Ring (22B) des Trägerflanschs (4) kommuniziert.

7. Axialflussmaschine (1) nach einem der Ansprüche 1 bis 6, wobei
der erste, linke Statordeckel (8) und der zweite, rechte Statordeckel (9) mehrere Dichtgeometrien (56) in Form von Elastomerdichtungen (56₁ 56₂ und 56s) ausgebildet haben, und
eine erste umlaufende Elastomerdichtung (56₁) im Bereich des äußeren Umfangs des Statordeckels 8 oder 9, eine zweite umlaufende Elastomerdichtung (56₂) im Bereich einer Öffnung (59) für die Nabe (50) und eine weitere Elastomerdichtung (56s) in jeder Aufnahme (16) für einen Phasenanschluss (13₁, 13₂ und 13s) ausgebildet ist.

8. Axialflussmaschine (1) nach Anspruch 7, wobei mehrere Schraubverbindungen (62), die sich durch den zentralen Trägerflansch (4) erstrecken, den ersten, linken Statordeckel (8) und den zweiten, rechten Statordeckel (9) gegeneinander an den zentralen Trägerflansch (4) drücken.

9. Axialflussmaschine (1) nach einem der vorangehenden Ansprüche 7 oder 8, wobei ein weiteres Dichtmittel (57) vorgesehen ist, das durch Speichen (60) definierte Aussparungen (64) des ersten, linken Statordeckels (8) und des zweiten, rechten Statordeckels (9) umgibt.

## Claims

1. An axial flux machine (1), having:
a first rotor disk (2) and a second rotor disk (3),
a stator (6), which is located in the direction of an axis (A) of the axial flux machine (1) between the first rotor disk (2) and the second rotor disk (3),
a central support flange (4), which defines a first side surface (4A) and a second side surface (4B) in the direction of the axis (A), divides the stator (6) in the direction of the axis (A) into a first stator half (6₁) and a second stator half (6₂) and has flow openings (54) formed from the second stator half (6₂) to the first stator half (6₁);
a first, left stator cover (8) which is mounted on the first side surface (4A) of the support flange (4) and has a collection channel (58S) formed on the outer circumference; and
a second, right stator cover (9) which is mounted on the second side surface (4A) of the support flange (4) and has a distribution channel (58V) formed on the outer circumference, wherein
a coolant flow (53) is defined from the distribution channel (58V) through the flow openings (54) to the collection channel (58S),
**characterised in that**
multiple iron cores (10) are held on the support flange (4) and extend in equal parts into the first stator half (6₁) and the second stator half (6₂), and
each of the iron cores (10) in the first stator half (6₁) and the second stator half (6₂) is enclosed by a wound coil (25) such that each coil (25) is spaced apart from an adjacent coil (25) so that there is always a gap (27) between two coils (25) through which a coolant flows in the second stator half (6₂) from radially outside to radially inside and in the first stator half (6₁) from radially inside to radially outside.

2. The axial flux machine (1) according to claim 1, wherein the distribution channel (58V) of the second, right stator cover (9), gaps (27) between the coils (25) of the second stator half (6₂), the flow openings (54), gaps (27) between the coils (25) of the first stator halves (6₁) and the collection channel (58S) of the first, left stator cover (8) are in fluid communication with each other.

3. The axial flux machine (1) according to claim 1 or 2, wherein the central support flange (4) has multiple circular ring segment-like window cut-outs (36) formed which are separated from one another by ribs (37), are arranged homogeneously distributed around a central opening (17) for a hub (50) of the stator (6) and in which the circular ring segment-like iron cores (10) are held centrally by means of a groove (34) via the webs (37).

4. The axial flux machine (1) according to claim 3, wherein the groove (34) is provided with an insulator (35).

5. The axial flux machine (1) according to claim 4, wherein the support flange (4) with mounted iron cores (10) is overmoulded with a plastic (45) such that the plastic (45) bears against both sides of an outer ring (22A), against the ribs (37) and against both sides of an inner ring (22B) of the support flange (4), against an upper side surface (330), against a lower side surface (33U) and against lateral side surfaces (33) of the iron cores 10 and flow openings (54) in the inner ring (22B) are left free of the plastic (45).

6. The axial flux machine (1) according to claim 5, wherein each of the wound coils (25) has a circular ring segment-like shape and surrounds the circular ring segment-like iron cores (10) overmoulded with plastic (45) and the gap (27) communicates with the associated flow opening (54) in the inner ring (22B) of the support flange (4).

7. The axial flux machine (1) according to any one of claims 1 to 6, wherein
the first, left stator cover (8) and the second, right stator cover (9) have multiple sealing geometries (56) in the form of elastomer seals (56₁, 56₂ and 56₃) and
a first circumferential elastomer seal (56₁) is formed in the region of the outer circumference of the stator cover 8 or 9, a second circumferential elastomer seal (56₂) is formed in the region of an opening (59) for the hub (50) and a further elastomer seal (56₃) is formed in each receptacle (16) for a phase connection (13₁, 13₂ and 13₃).

8. The axial flux machine (1) according to claim 7, wherein multiple screw connections (62) extending through the central support flange (4) press the first, left stator cover (8) and the second, right stator cover (9) against each other onto the central support flange (4).

9. The axial flux machine (1) according to any one of the preceding claims 7 or 8, wherein a further sealing means (57) is provided which surrounds cut-outs (64), defined by spokes (60), of the first, left stator cover (8) and the second, right stator cover (9).

## Revendications

1. Machine à flux axial (1) qui présente :
un premier disque de rotor (2) et un second disque de rotor (3),
un stator (6) qui est placé entre le premier disque de rotor (2) et le second disque de rotor (3) dans la direction d'un axe (A) de la machine à flux axial (1),
une bride de support centrale (4) définissant une première surface latérale (4A) et une seconde surface latérale (4B) dans la direction de l'axe (A), divisant le stator (6) dans la direction de l'axe (A) en une première moitié de stator (6₁) et une seconde moitié de stator (6₂) et comportant des ouvertures d'écoulement (54) formées de la seconde moitié de stator (6₂) à la première moitié de stator (6₁) ;
un premier couvercle de stator gauche (8) monté sur la première surface latérale (4A) de la bride de support (4) et comportant un canal de collecte (58S) formé sur la circonférence extérieure ; et
un second couvercle de stator droit (9) monté sur la seconde surface latérale (4A) de la bride de support (4) et comportant un canal de distribution (58V) formé sur la circonférence extérieure, dans laquelle
un flux de liquide de refroidissement (53) est défini depuis le canal de distribution (58V) à travers les ouvertures d'écoulement (54) jusqu'au canal de collecte (58S),
**caractérisée en ce que**
plusieurs noyaux de fer (10) sont maintenus sur la bride de support (4) et s'étendent de manière égale dans la première moitié de stator (6₁) et la seconde moitié de stator (6₂), et
chacun des noyaux de fer (10) dans la première moitié de stator (6₁) et la seconde moitié de stator (6₂) est entouré d'une bobine enroulée (25) de sorte que chaque bobine (25) est espacée d'une bobine (25) qui lui est adjacente, de façon à toujours avoir une fente (27) entre deux bobines (25) à travers laquelle un liquide de refroidissement s'écoule dans la seconde moitié de stator (6₂) de l'extérieur radialement vers l'intérieur radialement et dans la première moitié de stator (6₁) de l'intérieur radialement vers l'extérieur radialement.

2. Machine à flux axial (1) selon la revendication 1, dans laquelle le canal de distribution (58V) du second couvercle de stator droit (9), les fentes (27) entre les bobines (25) de la seconde moitié de stator (6₂), les ouvertures d'écoulement (54), les fentes (27) entre les bobines (25) des premières moitiés de stator (6₁) et le canal de collecte (58S) du premier couvercle de stator gauche (8) sont en communication fluidique les uns avec les autres.

3. Machine à flux axial (1) selon la revendication 1 ou 2, dans laquelle la bride de support centrale (4) comporte une pluralité d'évidements de fenêtre (36) en forme de segments annulaires, qui sont séparés les uns des autres par des entretoises (37), sont répartis de manière homogène autour d'une ouverture centrale (17) pour un moyeu (50) du stator (6) et dans lesquels les noyaux de fer (10) en forme de segments annulaires sont maintenus au centre au moyen d'une rainure (34) sur les entretoises (37).

4. Machine à flux axial (1) selon la revendication 3, dans laquelle la rainure (34) est munie d'un isolateur (35).

5. Machine à flux axial (1) selon la revendication 4, dans laquelle la bride de support (4) avec des noyaux de fer (10) montés est encapsulée avec une matière plastique (45), de sorte que la matière plastique (45) est appliquée des deux côtés sur une bague extérieure (22A), sur les entretoises (37) et des deux côtés sur une bague intérieure (22B) de la bride de support (4), sur une surface latérale supérieure (330), sur une surface latérale inférieure (33U) et sur les surfaces latérales de côté (33) des noyaux de fer 10 et les ouvertures d'écoulement (54) dans la bague intérieure (22B) sont laissées libres par la matière plastique (45).

6. Machine à flux axial (1) selon la revendication 5, dans laquelle chacune des bobines enroulées (25) présente une forme de segment annulaire et entoure les noyaux de fer (10) en forme de segments annulaires qui sont encapsulés de matière plastique (45) et la fente (27) communique avec l'ouverture d'écoulement (54) associée dans la bague intérieure (22B) de la bride de support (4).

7. Machine à flux axial (1) selon l'une quelconque des revendications 1 à 6, dans laquelle
le premier couvercle de stator gauche (8) et le second couvercle de stator droit (9) comportent plusieurs géométries d'étanchéité (56) sous forme de joints élastomères (56₁ 56₂ et 56₃), et
un premier joint élastomère périphérique (56₁) est formé dans la zone de la circonférence extérieure du couvercle de stator 8 ou 9, un second joint élastomère périphérique (56₂) est formé dans la zone d'une ouverture (59) pour le moyeu (50) et un autre joint élastomère (56₃) est formé dans chaque logement (16) pour un raccordement de phase (13₁, 13₂ et 13₃).

8. Machine à flux axial (1) selon la revendication 7, dans laquelle une pluralité de raccords à vis (62), qui s'étendent à travers la bride de support centrale (4), appuient le premier couvercle de stator gauche (8) et le second couvercle de stator droit (9) l'un contre l'autre sur la bride de support centrale (4).

9. Machine à flux axial (1) selon l'une quelconque des revendications précédentes 7 ou 8, dans laquelle est prévu un autre moyen d'étanchéité (57) qui entoure des évidements (64) définis par des rayons (60) du premier couvercle de stator gauche (8) et du second couvercle de stator droit (9).
